# EUROPEAN PATENT SPECIFICATION

(11) **EP 1 368 572 B1**
(45) Date of publication and mention of the grant of the patent: **28.09.2005**
(21) Application number: 01955532.5
(22) Date of filing: 25.07.2001
(51) Int. Cl.: F16C 27/06, F16F 1/38

(54) **A BUSHING WITH CONTROLLED ELASTIC ABSORPTION OF RADIAL STRESS**
BUCHSE MIT GEREGELTER ELASTISCHER DÄMPFUNG RADIALER SPANNUNGEN
BAGUE A ABSORPTION ELASTIQUE CONTROLEE DES CONTRAINTES RADIALES

(30) Priority: 12.03.2001 IT CR20010001 U
(43) Date of publication of application: 10.12.2003
(73) Proprietor: S.A.V. S.R.L., 24040 Zingonia di Ciserano (IT)
(72) Inventor: SPINELLA, Giuseppe, I-24040 Zingonia di Ciserano (IT)
(74) Representative: Mascioli, Alessandro
(86) International application number: PCT/IT2001/000397
(87) International publication number: WO 2002/073052

(56) References cited:
- FR-A- 1 485 799
- FR-A- 2 173 397
- GB-A- 1 250 700
- US-A- 3 424 503
- US-A- 4 878 767

## Description

The present invention concerns a bushing with elastic absorption of radial stress with a control means for the radial compressibility.

Bushings with elastic absorption of radial stress are used for connecting a pin to an axis, where the pin is subject to angular shifting with respect to said axis. They are also used in many fields and among these the one of haulage vehicles. Here they are employed, e.g., for the connection of the leaf spring eye of the back suspension to the undercarriage of the vehicle, or also for the connection of the supporting arms of the front wheels to the undercarriage as well as to the hub of said wheels, or still in the connection of connecting rods, arms etc.

Usually, such bushings comprise two tubular, cylindrical and coaxial rings made of metal; and an elastic rubber ring vulcanized to the inner ring and to the outer ring. Angular shifting between the elements connected by the bushing is allowed by the yielding of the rubber ring, which also produces the effect of absorbing bumps and radial stress. The assembling takes place by forcing the outer ring into an appropriate seat while the pin is forced into the inner metal ring.

This kind of bushing has a number of inconveniences, among which the breaking of the rubber ring caused by torsional stress; high cost due to vulcanization and expensive mechanical working of the metal surfaces to be coupled by interference; moreover, the assembling is difficult; the weight is high.

According to known technique, the first one of said inconveniences (i.e. the fatigue failure of the rubber ring,) is solved with a bushing comprising an inner ring made of self-lubricating material, and an elastic rubber ring freely fitted on said inner ring and fixed by means of vulcanization to the outer ring, realized in metal and coaxial to the first one. The assembling of the bushing takes place, in this case, by forcing the outer ring into the mounting seat, after boring the latter, while the pin is free to rotate into the self-lubricating ring.

Consequently, torsional stress is not transmitted to the rubber ring, whose only task is to absorb the pushes and the stress in radial direction. This mentioned solution eliminates the risk of torsional fatigue failure of the rubber ring and increases the reliability and the life of said bushing; furthermore, it does not request to force by the pin into the internal ring. However, said solution does not eliminate other inconveniences such as the need of preparing for said bushing a seat for the interference assembling of the outer ring with consequent high costs due to the mechanical working, to the difficulty of said assembling, to the high weight and cost.

Another bushing is known from Utility Model application no. CR97U000005 filed on 17^{th} April 1997 by the same applicant, mainly comprising an inner ring made of self-lubricating material, onto which an elastic ring made of rubber or of any other elastic material is freely fitted. The outer cylindrical surface of said elastic ring is provided with rises that allow to force said rubber ring directly into the mounting seat of the bushing, so that no particular working or preparation of the seat is required.

This kind of bushing shows the advantage of having a simple and saving realization: in fact, it does not need the outer ring fixed by vulcanization to the rubber ring, and does not need expensive mechanical working. The assembling of the bushing takes place by forcing the buckling rubber ring into the seat, that is much easier than forcing of metal parts. Furthermore, the seat requires less limiting dimensional tolerances and is less expensive.

However, this kind of bushing has the disadvantage that it is not suitable for those application that require a high radial stiffness and the capacity of bearing high radial loads. As an example: if said bushings are used on haulage vehicles for the connection of the leaf springs of the back suspensions of the undercarriage of the vehicle, they may be applied only to vehicles with a load capacity up to about 10 tons. A further inconvenience consists in that in the presence of high radial loads, the rubber ring is subject to relevant buckling in longitudinal direction that may cause expansion and stretching of the rubber, reducing durability and reliability.

Further prior art is known from US 3424503. This last document discloses a sliding bearing (e.g. for supporting a rotating shaft) comprising a tubular rubber body, a bushing of glass-fiber reinforced polyamide arranged within and connected to said rubber body, and a sleeve of porous self-lubricating sinter metal slide fitted in said bushing for receiving therein a metal to be journalled in said bearing. The bushing and the rubber body are firmly connected by means of a dove-tail arrangement, or vulcanizing the rubber body to the bushing.

It is the aim of the present invention to eliminate all above mentioned inconveniences.

In particular, it is the aim of the present invention to realize a bushing with elastic absorption of radial stress that allows the control of the radial compressibility, and that may sustain radial loads of considerable entity in a reliable manner, and that the realization thereof is cheap and the assembly is easy.

The aims set forth are reached by an elastic bushing according to claim 1.

For making the coupling between the bushing and the circular mounting seat as less expensive as possible, the outer surface of the elastic ring comprises bulge ribbings that cooperate in interference with the internal surface of said seat.

Said elastic ring is preferably a rubber ring, while the reinforcing sleeve is advantageously made of glass reinforced nylon; its thickness is correlated to the entity of the radial forces to bear, and is vulcanized to the internal surface of the rubber ring.

The bulge ribbings on the outer surface of the elastic ring , according to the cited Utility Model of the same applicant, are advantageously placed at regular distances one from the other and are arranged in a longitudinal direction, parallel to the axis of the bushing. In an alternative, bulges with annular shape, parallel one to the other, might perform the same function.

The main advantages of the present invention consist in that said bushing is able to bear high radial loads due to the control of the radial buckling given by the reinforcing sleeve and in that the reinforcing sleeve limits and contains the longitudinal buckling of the rubber ring. A further advantage consists in that by suitably choosing the thickness of the internal reinforcing sleeve it is possible to realize bushings with different degrees of radial stiffness, fitting to different application fields.

The present invention will be explained more in detail hereinbelow relating to the enclosed drawings in which an embodiment is shown.

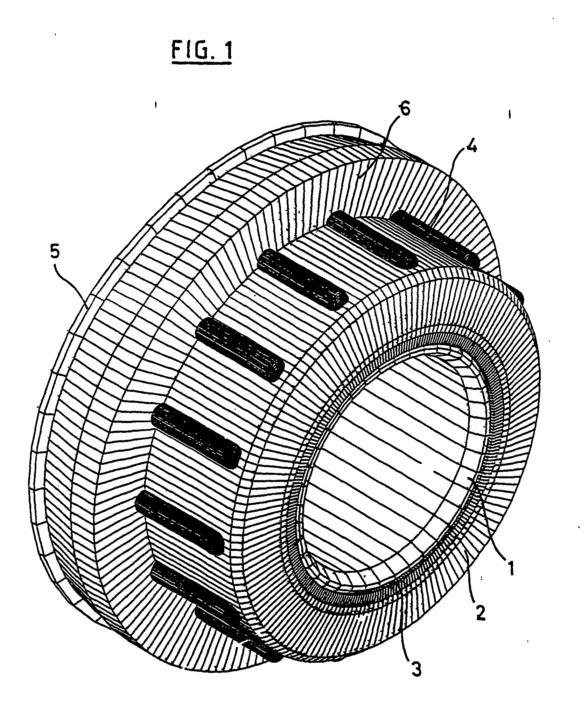

Figure 1 shows a perspective view of a bushing with elastic absorption of radial stress with a control means for the radial compressibility, according to the present invention.

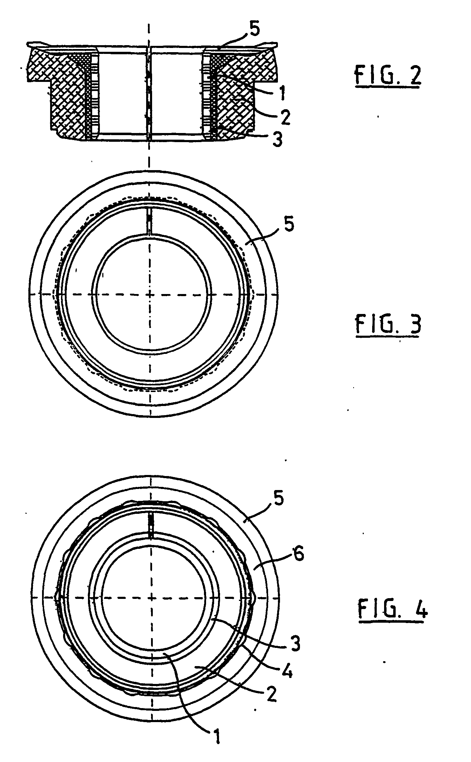

Figure 2 shows said bushing in an axial section.

Figures 3 and 4 show said bushing in a top and a bottom view.

Relating now to the drawings, the bushing with elastic absorption of radial stress with a control means for the radial compressibility according to the present invention mainly comprises an inner ring 1 made of plastic self-lubricating material, onto which a rubber ring 2 is freely fitted. An annular reinforcement sleeve 3 of suitable thickness is fixed to the internal cylindrical surface of said rubber ring 2, and is made of a substantially rigid material, like e.g. glass reinforced nylon. The coupling between said ring 2 and said reinforcement 3 is advantageously realized by means of a vulcanization process.

The external cylindrical surface of said ring 2 has a plurality of bulge ribbings 4 that locally increase the thickness of said ring 2.

Furthermore, in the embodiment shown, the inner ring 1 and the rubber ring 2 have stop collars 5 and 6 that allow the bushing to bear a compression force parallel to the axis of said bushing. In addition, it is possible to place a plane metal washer - not shown - of suitable thickness, similar to the one of collars 5 and 6, against said collar 6: said washer allows to distribute the longitudinal force transmitted to the bushing onto a greater surface and in a uniform manner, thus increasing the resistance of said bushing to compression forces. It is evident that any variant of the bushing according to the present invention, of generic or simplified kind, will not be provided with said collars 5 and 6.

The assembling of the bushing according to the present invention takes place by forcing the external surface of the rubber ring 2 into the seat of the bushing. During such operation, the bulge ribbings 4 get compressed and elastically buckled, while the space between one ribbing and the other allows a free lateral extension of the same. Thus the bushing is fixed in its own seat by the friction between the buckled rubber bulges and the internal surface of the housing seat. The pin is free to rotate on the internal surface of said tubular element 1.

During normal working, said rubber ring 2 absorbs bumps and radial stress transmitted by the pin to the bushing, while the annular reinforcement sleeve 3 of suitable thickness gives the bushing the required radial stiffness, avoiding squeezing and longitudinal deformation of the rubber ring 2.

## Claims

1. An elastic bushing comprising an inner ring (1) made of self-lubricating material, and an elastic ring (2) freely fitted on said inner ring (1), wherein said elastic ring (2) comprises a reinforcing sleeve (3) made of a substantially rigid material, said reinforcing sleeve (3) being coupled to the inner surface of said elastic ring (2).

2. A bushing according to claim 1, ***characterized in that*** the external surface of said elastic ring (2) comprises bulge ribbings (4).

3. A bushing according to claim 2, ***characterized in that*** said bulge ribbings (4) are placed at regular distances one from the other.

4. A bushing according to claim 2, ***characterized in that*** said bulge ribbings (4) develop in a longitudinal direction substantially parallel to the axis of said bushing.

5. A bushing according to claim 2, ***characterized in that*** said bulge ribbings (4) have an annular shape.

6. A bushing according to claim 1, ***characterized in that*** said elastic ring (2) is made of rubber.

7. A bushing according to claim 1, ***characterized in that*** said annular reinforcing sleeve (3) is fixed to said ring (2) by means of vulcanization.

8. A bushing according to claim 1, ***characterized in that*** said inner ring (1) and rubber ring (2) are provided with stop collars (5, 6).

9. A bushing according to claim 8, ***characterized in that*** it comprises a plane metal washer that may be placed against said stop collar (6).

10. A vehicle ***characterized in that*** it comprises at least one bushing according to the preceding claims.

## Patentansprüche

1. Federbuchse bestehend aus einem aus selbstschmierendem Material ausgeführten Innenring (1) und einem auf diesen Innenring (1) frei aufgebrachten Federring (2), wobei besagter Federring (2) eine Verstärkungshülse (3) umfasst, die aus einem im Wesentlichen steifen Material ausgeführt ist; diese Verstärkungshülse (3) ist mit der Innenfläche besagten Federrings (2) verbunden.

2. Buchse gemäß Anspruch 1, **dadurch gekennzeichnet, dass** die Außenfläche besagten Federrings (2) erhöhte Rippen (4) aufweist.

3. Buchse gemäß Anspruch 2, **dadurch gekennzeichnet, dass** diese erhöhten Rippen (4) in regelmäßigen Abständen zueinander angeordnet sind.

4. Buchse gemäß Anspruch 2, **dadurch gekennzeichnet, dass** sich diese erhöhten Rippen (4) in Längsrichtung im Wesentlichen parallel zur Buchsenachse erstrecken.

5. Buchse gemäß Anspruch 2, **dadurch gekennzeichnet, dass** diese erhöhten Rippen (4) eine ringförmige Gestalt haben.

6. Buchse gemäß Anspruch 1, **dadurch gekennzeichnet, dass** besagter Federring (2) aus Gummi ausgeführt ist.

7. Buchse gemäß Anspruch 1, **dadurch gekennzeichnet, dass** die Verstärkungshülse (3) mittels Vulkanisierung am Federring (2) befestigt ist.

8. Buchse gemäß Anspruch 1, **dadurch gekennzeichnet, dass** besagter Innenring (1) sowie der Gummiring (2) über Anschlagbünde (5, 6) verfügen.

9. Buchse gemäß Anspruch 8, **dadurch gekennzeichnet, dass** sie eine flache Metallscheibe umfasst, welche gegen besagten Anschlagbund (6) gehalten werden kann.

10. Ein Fahrzeug, **dadurch gekennzeichnet, dass** es mindestens eine Buchse gemäß vorstehender Ansprüche umfasst.

## Revendications

1. Douille élastique comprenant une bague intérieure de retenue (1) réalisée en matériau auto-lubrifiant et une bague élastique (2) associée librement sur la bague intérieure (1), où ladite bague élastique (2) comprend un manchon de renfort (3) essentiellement rigide, ledit manchon de renfort (3) étant couplé à la surface intérieure de ladite bague élastique (2).

2. Douille selon la revendication 1, **caractérisée en ce que** la surface extérieure de dite bague élastique (2) comprend des nervures en relief (4).

3. Douille selon la revendication 2, **caractérisée en ce que** lesdites nervures en relief (4) sont disposées à intervalles réguliers les unes des autres.

4. Douille selon la revendication 2, **caractérisée en ce que** lesdites nervures en relief (4) se développent longitudinalement et essentiellement parallèlement à l'axe de la douille.

5. Douille selon la revendication 2, **caractérisée en ce que** lesdites nervures en relief (4) ont une forme en anneau.

6. Douille selon la revendication 1, **caractérisée en ce que** ladite bague élastique (2) est en caoutchouc.

7. Douille selon la revendication -1, **caractérisée en ce que** ledit manchon de renfort (3) est fixé par vulcanisation sur la bague (2).

8. Douille selon la revendication 1, **caractérisée en ce que** ladite bague intérieure (1) et la bague en caoutchouc (2) sont munies de colliers d'arrêt (5, 6).

9. Douille selon la revendication 8, **caractérisée par le fait qu'**elle comprend une rosette métallique plate, pouvant être placée contre dit collier d'arrêt (6).

10. Un véhicule **caractérisé par le fait qu'**il comprend au moins une douille suivant les revendications qui précèdent.
